# EUROPEAN PATENT SPECIFICATION

(11) **EP 2 775 827 B1**
(45) Date of publication and mention of the grant of the patent: **23.10.2019**
(21) Application number: 11794247.4
(22) Date of filing: 09.11.2011
(51) Int. Cl.: A01M 1/22, A01M 31/00

(54) **PEST CONTROL SYSTEM, PEST CONTROL METHOD AND PEST CONTROL PROGRAM**
SCHÄDLINGSBEKÄMPFUNGSSYSTEM, SCHÄDLINGSBEKÄMPFUNGSVERFAHREN UND SCHÄDLINGSBEKÄMPFUNGSPROGRAMM
SYSTÈME DE CONTRÔLE D'ORGANISME NUISIBLE, PROCÉDÉ DE CONTRÔLE D'ORGANISME NUISIBLE ET PROGRAMME DE CONTRÔLE D'ORGANISME NUISIBLE

(43) Date of publication of application: 17.09.2014
(73) Proprietor: Feugier, Francois Gabriel, 69004 Lyon (FR)
(72) Inventor: Feugier, Francois Gabriel, 69004 Lyon (FR)
(74) Representative: IP Trust
(86) International application number: PCT/JP2011/006271
(87) International publication number: WO 2013/069059

(56) References cited:
- WO-A1-2010/125141
- WO-A2-2006/101654
- GB-A- 2 330 449
- US-B1- 6 653 971

## Description

### Technical Field

The present invention relates to pest control system, pest control method and pest control program for controlling pests in a farm such as a green house or a vertical farm.

### Background Art

Conventionally, some technologies for controlling pests are proposed. For example, Japanese Patent Laid-Open No. 2011-92023 discloses an insect pest control apparatus which is equipped with a light source for irradiation with a light of at least a part of wavelengths of approximately 470-580 nm wavelengths, and a control device controls output of light irradiated from the light source on the base of infestation degree of insect pests or activity degree of insect pests (Patent Literature 1). Other techniques are known from US6653971.

### Citation List

### Patent Literature

PTL 1: Japanese Patent Laid-Open No. 2011-92023

### Summary of Invention

### Technical Problem

However, in the invention described in Patent Literature 1, the insect pest control apparatus irradiates the entire area of agricultural field with the light from the fixed light source at any time. Therefore, a problem of the above Patent Literature 1 is that not only the insect pest but also useful organisms might be killed involuntarily, a negative effect might be caused on a growth of crops, and a cost for lighting is very expensive.

In addition, in the invention described in Patent Literature 1, the insect pest control apparatus irradiates with the light at a predetermined wavelength irrespective of a species of the insect pest. Therefore, in case a wide variety of the insect pest exist, a control effect is weak because of incapable of irradiating with a light at a wavelength suitable to control each insect pest.

The present invention has been made to solve such problems, and it is an object of the present invention to provide a pest control system, a pest control method and a pest control program which can destroy pests from agriculture with no harmful effects to other useful organisms, crops and humans as no pesticides are used.

### Solution to Problem

A pest control system according to the present invention comprises; a detection beam emitter for emitting a detection beam for detecting said pests; a reflected signal receptor for receiving a reflected signal reflected from an object irradiated with said detection beam; a pest detecting means for detecting said pests by comparing a reflected data obtained from said reflected signal with a signature data having a signature of target pests stored in a signature data storage means; a targeting means for aiming a destruction beam at said pests for destroying said pests upon detecting said pests; and a destruction beam emitter for emitting said destruction beam to said pests upon detecting said pests.

In addition, in the present invention, the system may comprise a rotary polyhedron mirror being arranged in a plurality of mirrors in the form of a polyhedron instead of said targeting means; wherein said rotary polyhedron mirror is rotated, said detection beam emitter emits said detection beam to said rotary polyhedron mirror, thereby scan an intended area by said detection beam reflected via one of said mirrors, said reflected signal receptor receives said reflected signal from said area via said mirror, and said destruction beam emitter irradiates said pests with said destruction beam reflected via said mirror upon detecting said pests.

Further, in the present invention, the system may further comprise; a reflected signal storage means for gathering said reflected signal therein; a pest control statistical data making means for making a pest control statistical data by using a useful data for a pest control of said reflected signal gathered in said reflected signal storage means; and a predicting means for predicting a dynamics of said pests based on said pest control statistical data.

In addition, in the present invention, the system may further comprise; a wavelength selecting means for selecting wavelengths of said destruction beam based on said signature data of said pests detected by said pest detecting means.

Further, in the present invention, wherein besides said signature data of target pests, said signature data includes one or more signature data of useful organisms, crops, damaged pests by said destruction beam, and symptoms of infestation.

A pest control method according to the present invention comprises the steps of: a detection beam emitting step for emitting a detection beam for detecting said pests; a reflected signal receiving step for receiving a reflected signal reflected from an object irradiated with said detection beam; a pest detecting step for detecting said pests by comparing a reflected data obtained from said reflected signal with a signature data having a signature of target pests; a targeting step for aiming a destruction beam at said pests for destroying said pests upon detecting said pests; and a destruction beam emitting step for emitting said destruction beam to said pests upon detecting said pests.

A pest control program according to the present invention which makes a computer execute the method according to any one of claims 6 to 10.

### Advantageous Effects of Invention

According to the present invention, pests can be destroyed from agriculture with no harmful effects to other useful organisms, crops and humans as no pesticides are used.

### Brief Description of Drawings

Fig. 1 is an overall view showing a first embodiment of a pest control system according to the present invention.
Fig. 2 is a block diagram showing the pest control system of this embodiment.
Fig. 3 is a diagram showing a behavior of a patrol device of this embodiment.
Fig. 4 is a flowchart showing a first embodiment of a pest control method according to the present invention.
Fig. 5 is a flowchart showing a pest control method of this embodiment.
Fig. 6 is a block diagram showing a second embodiment of a pest control system according to the present invention.
Fig. 7 is a diagram showing a pest control system of a second embodiment according to the present invention.
Fig. 8 is a diagram showing another example of the pest control system according to a second embodiment.
Fig. 9 is a diagram showing another example of the pest control system according to a second embodiment.
Fig. 10 is a diagram showing another example of the pest control system according to a second embodiment.

### Description of Embodiments

A first embodiment of a pest control system, a pest control method and a pest control program according to the present invention will be described with reference to the drawings.

In the present invention, "pest" has a conceptual meaning including all organisms harmful to crops or plants such as insects, invertebrates (arthropods, mollusks, etc.), fungi, bacteria, weeds, etc.

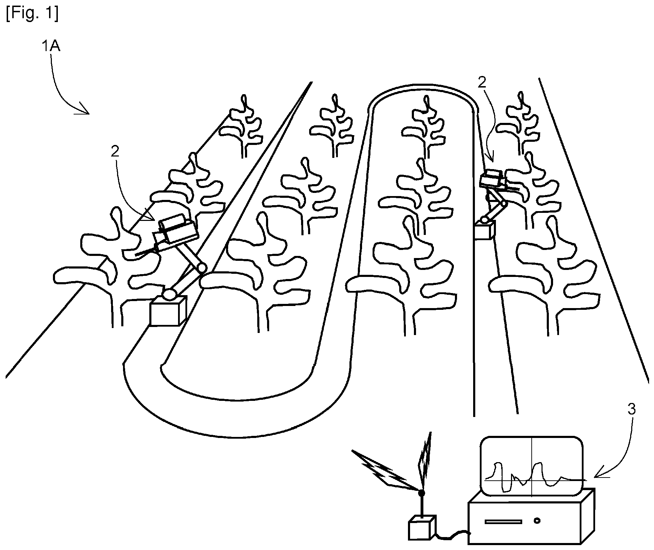

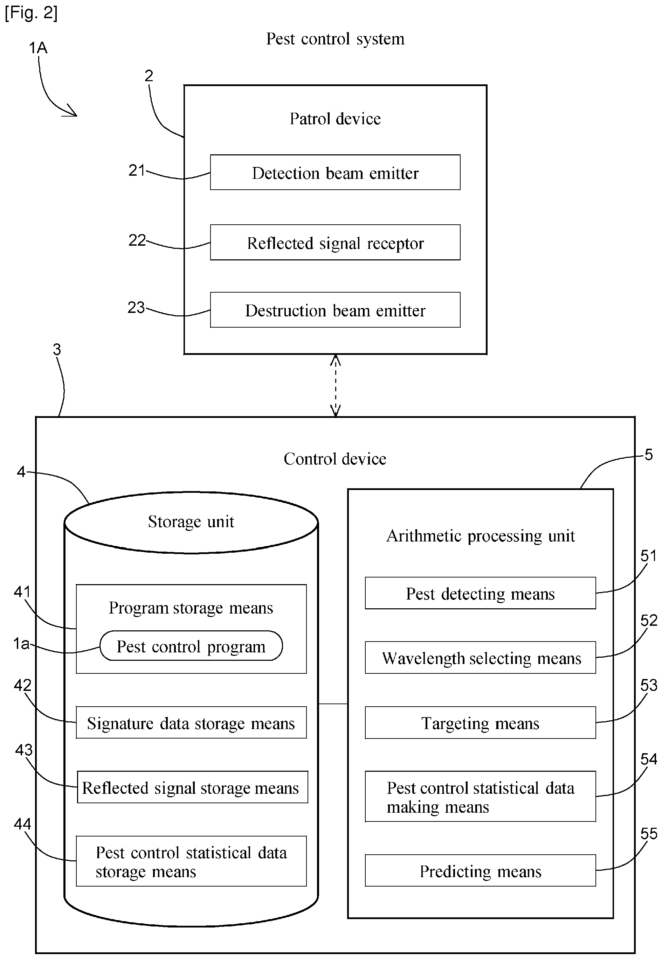

As shown in Figures 1 and 2, the pest control system 1A according to the invention primarily comprises a patrol device 2 for patrolling areas to be controlling pests, and a control device 3 for controlling the patrol device 2. Each device of this embodiment will be described in more detail.

The patrol device 2 is designed to patrol areas to be controlling pests. According to the invention, as shown in Figure 1, on the assumption that plant quantity is large, the patrol device 2 is mounted on a self-propelled robot moving in the furrows, on rails on the ground or attached to the ceiling of a greenhouse, etc. The complexity of the robot depends on constraints of observation and destruction, the geometry of the terrain and plant distribution. Basically, the robot has to be able to move while carrying the material necessary for its task. Its shape must allow it to move easily amongst the different shapes of crop plants (maize, tomatoes, apple trees, etc.).

Energy can be supplied to the robots under different combinations of the following, but not limited to: through electric rails, solar panels, batteries, etc. In case of batteries, when a robot's battery energy level becomes low, the robot can go automatically to a supply station to charge or exchange its batteries.

The patrol device 2 is not limited to the above mentioned embodiment, but may be altered accordingly. For example, if the robot has to move in an autonomous fashion (without rails), it can be guided inside virtual circulation corridors indicated by GPS or positional information radio emitters arranged along the borders of the patrolled area. In the simplest case, the robot can be reduced to a handy device that users can move in front of plants, such as a camera, to film all the nooks of the plants to detect and kill all the pests.

As shown in Figure 2, the patrol device 2 primarily comprises a detection beam emitter 21, a reflected signal receptor 22, and a destruction beam emitter 23. Each component will be described in more detail.

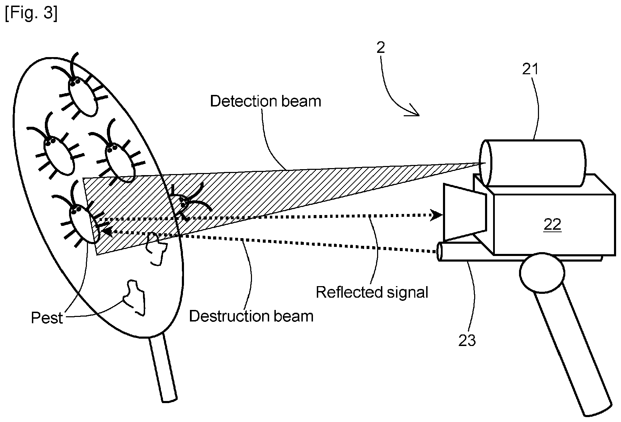

The detection beam emitter 21, as shown in Figure 3, is designed to emit a detection beam for detecting the pests. LED (Light Emitting Diode), laser beam, or electromagnetic beam can be used as the detection beam. In this embodiment, the detection beam emitter 21 locally sends to the plants and the ground the detection beam with wavelengths best revealing pests while the robot patrols among the plants of the crops.

The reflected signal receptor 22, as shown in Figure 3, is designed to receive a reflected signal reflected by an object irradiated with the detection beam. In case of using any spectroscopy method for detection, a spectrometer can be used as the reflected signal receptor 22, which receives a reflection spectrum reflected by an object.

According to the invention, the robot films the plants and the ground with full spectral imaging by using a full/multispectral imaging camera as the reflected signal receptor 22. Each pixel of the video, containing information on a wide spectrum, is analyzed in real time to detect pests. To save computation time, the robot can also use multispectral imaging where only wavelengths of interest (those revealing best the pests and established during the creation of the database) are measured. With this method, one can at the same time analyze images of the movies with computer vision techniques to improve level of detection.

In case of using a computer vision techniques such as image segmentation, texture analysis, pattern recognition, etc., a CCD (Charge-Coupled Device) camera can also be used as the reflected signal receptor 22, which receives an image signal of the object in the form of a still image and a moving image. For example, the robot films the plants while patrolling and the movie is analyzed in real time using such techniques to find pests. In this embodiment, the reflected signal receptor 22 sends the reflected signal to the control device 3 for real-time analyses just after receiving it, or the signal can be analyzed in the robot.

The destruction beam emitter 23, as shown in Figure 3, is designed to emit a destruction beam to the pests upon detecting the pests. LED (Light Emitting Diode), laser beam, or electromagnetic beam can be used as the destruction beam. In this embodiment, the destruction beam emitter 23 emits on the area the destruction beam with the best wavelengths to destroy the pest in response to a destruction order from the control device 3. Also, the destruction beam emitter 23 is oriented at the pests by a targeting means 53 described below.

Next, as shown in Figure 2, the control device 3 primarily comprises a storage unit 4 which stores a pest control program 1a of this embodiment and other data and an arithmetic processing unit 5 which performs arithmetic processing by using various data for controlling the patrol device 2. In this embodiment, the control device 3 builds up with a computer set up in a remote center, and is capable of wireless communication with the patrol device 2. However, the control device 3 is not limited to the above mentioned embodiment, but may be altered accordingly. For example, all or part of the control device 3 can be embarked on the robot together with the patrol device 2.

The storage unit 4 builds up with a hard disk, a flash memory, a ROM (Read Only Memory) and a RAM (Random Access Memory), etc., which also functions as a working area for processing by the arithmetic processing unit 5. As shown in Figure 2, the storage unit 4 comprises a program storage means 41, a signature data storage means 42, a reflected signal storage means 43, and a pest control statistical data storage means 44. Each means will be described in more detail.

The program storage means 41 is designed to be installed with the pest control program 1a of this embodiment therein. The pest control program 1a which is executed by the arithmetic processing unit 5 makes a computer run each means described later. Also, a utilization form of the pest control program 1a is not limited to the above mentioned embodiment, but may be altered accordingly. For example, the pest control program 1a can be boot up from a record medium such as CD-ROM, etc., or can be used by ASP (Application Service Provider) system from a remote server, etc.

The signature data storage means 42 is designed to store a signature data having a signature of target pests. The signature data are used to identify a species of each target pest, and are used to select the best wavelengths of the destruction beam to destroy each target pest. In case of using any spectroscopy method for detection, the signature data can be spectral signatures obtained as a result of some mathematical treatment on the raw absorption spectrum data to characterize the most relevant wavelength absorbed by the target pests.

Measuring reflection spectrum of any material is a very well-known technique. The object to analyze is targeted by an electromagnetic wave emitter whose signal spectrum is known. The reflected signal hits a spectrometer that analyzes it and the most relevant wavelengths that characterize the object are determined to create a characteristic spectral signature. When creating a database of the signature data, the user should consider all distortions that may occur to the signal in situ, such as a changing sunlight, as well as the fact that light can be transmitted and reflected by plant leaves. During the actual in situ search for pests, the same emitted signal used to make the database is used, and reflected signal measured are compared in real time to the spectral signatures database for matching.

According to the invention, the signature data includes one or more signature data of useful organisms, crops, damaged pests by said destruction beam, and symptoms of infestation besides the signature data of target pests. The signature data of useful organisms are helpful to count them and avoid more efficiently destroying them. The signature data of crops are helpful to allow choosing the destruction beam wavelengths the least absorbed by crop plants. The signature data of damaged pests are helpful to evaluate efficiency of destruction and avoid hitting the same pest several times with the destruction beam.

In some cases, the plant can be infested by a pest that is not reachable by the destruction beams because it is hidden amongst the leaves, or within the plant body. In that case, the plant may present symptoms of infestation characterized by different levels of its own chemical components such as nitrogen, hormones, water, pigments, etc., compared to a healthy state. The spectral signatures of these symptoms are added to the database during its creation, or "on the fly" when the robot is patrolling, for later classification by the user. The signature data of the symptoms are helpful to reveal that a pest is "in" the plant but not reachable.

The signature data is not limited to the above mentioned embodiment, but may be altered accordingly. For example, in case of using the computer vision techniques for detection, the signature data can be mathematically formulated reference shapes, textures, contrasts, etc. of each target pest, etc.

Also, in this embodiment, in view of easiness and quickness for "in field" detection, the database of relevant signature data is prebuilt in the signature data storage means 42. However, a database of raw reflected signal such as spectral, texture, etc., can be used for detection, if on the fly calculation is not too much time consuming.

Furthermore, the database can also be updated by the user to add the signature data unknown to the database. The user can chooses the "learning mode" on the control device 3 to teach the database what the new item is (weed, fungi symptom, crop plant, etc.) and what to do if this items is spotted (destroy, protect, count, ignore, etc.). Then, the user can direct the detector (it can be a beam/camera pen attached to the robot) on the new item and takes several data samples. Thus, a number of samples from different items can be input in the database. The database evolves following the user's requirements.

In addition, the database can also incorporate new data "on the fly" from in situ autonomous work to improve detection. In case of ambiguous matching or unknown signature, the control device 3 saves the signature or takes a photo of the unknown item so the user can decide later on to classify the item's signature in the proper category such as "pest", "infestation symptom", "useful", "weed", etc. A new and more accurate database can be downloaded from Internet by the user as well as software updates to allow continuous improvement of the system. Downloadable databases can be maintained up-to-date by some company or by users.

The reflected signal storage means 43 is designed to store the reflected signal therein. The database of the reflected signal is built in the reflected signal storage means 43, and is updated with all the reflected signals gathered by the patrol device 2: pest type and location, quantity, plant health, etc. Through the use of the database, the user can follow in real time the evolution of an epidemic, and adjust the level of efforts required to protect the crop.

The pest control statistical data storage means 44 is designed to store a pest control statistical data therein. The pest control statistical data is used for optimizing an action against pests and for improving crop yield. In this embodiment, the pest control statistical data is a spatial data such as spatial pest density including density distribution and type of each pest, including weeds; a spatial distribution of concentration/density of nitrogen/silicon/hairs/etc., in/on the plants/leaves/fruits/stems; a degree of ripening of fruits/seeds/leaves; the plant leaf area per plant or per unit field area; the number of fruits/seeds/leaves per plants/field area; etc. The pest control statistical data can also include the height at which a pest has been localized, such as "ground level", "top of the plant", "39 cm from the ground", etc.

The arithmetic processing unit 5 builds up with a CPU (Central Processing Unit), etc., and executes the pest control program 1a installed in the storage unit 4, thereby making, for example, a computer function as a pest detecting means 51, a wavelength selecting means 52, a targeting means 53, a pest control statistical data making means 54 and a predicting means 55 as shown in Figure 2. Each means will be described in more detail.

The pest detecting means 51 is designed to detect the pests by using the reflected signal and the signature data. First, the pest detecting means 51 obtains a reflected data by analyzing the reflected signal generated by the reflected signal receptor 22. Then, the pest detecting means 51 compares the reflected data obtained from said reflected signal with the signature data stored in the signature data storage means 42.

As a result, if both data are matched, the pest detecting means 51 sends back an order for destruction to the destruction beam emitter 23 by assuming that the pests are detected. At the same time, in this embodiment, the pest detecting means 51 notifies the wavelength selecting means 52 of the species of the pests, and notifies the targeting means 53 of some data to destroy the pests such as the spatial coordinates of the pest, the power required and the diameter of the destruction beam, etc. On the other hand, if both data are not matched, the pest detecting means 51 determines that the pests are not detected.

In case of using the spectroscopy method for detection, the pest detecting means 51 obtains an absorption spectrum as the reflected data on the basis of the reflection spectrum received as the reflected signal. Alternatively, the pest detecting means 51 obtains a wide spectrum as the reflected data on the basis of the spectrum images such as full spectral images, hyper spectral images and multi spectral images received as the reflected signal. Then, the pest detecting means 51 determines presence or absence of the pests by comparing the absorption spectrum or the wide spectrum with the spectral signatures data.

In case of using the computer vision techniques for detection, the pest detecting means 51 obtains a shape/texture/pattern/etc. of the pests as the reflected data on the basis of the image signal as the reflected signal. Then, the pest detecting means 51 determines presence or absence of the pests by comparing the shape/texture/pattern/etc. with the reference signature data dedicated for computer vision detection.

Incidentally, in the case of fungus spot, the shape may not be a good criterion as a spot may have different shapes and sizes, whereas the texture may be the same and characterize the species of the fungus. So, the pest detecting means 51 had better use texture analysis, contrast, visible colors, etc. for detecting the fungus.

The wavelength selecting means 52 is designed to select wavelengths of the destruction beam based on the signature data of the detected pest. Specifically, the wavelength selecting means 52 refers to the signature data storage means 42 after receiving species of the detected pests from the pest detecting means 51. Then, the wavelength selecting means 52 determines wavelengths responding to the signature data as the best wavelength to destroy the pests.

At this time, the wavelength selecting means 52 decides the wavelengths so that the energy of the destruction beam will be well absorbed by the pests but not so well by the plant. Optimally, the wavelength selecting means 52 refers to one or more signature data of useful organisms, crops, damaged pests by said destruction beam, and symptoms of infestation besides the signature data of target pests. This enables more precise attack to the pests with little harmful effect on the plant.

The targeting means 53 is designed to aim the destruction beam at the pests upon detecting the pests. In this embodiment, the targeting means 53 changes the orientation of the destruction beam after receiving the direction/position of the pests from the pest detecting means 51. Thereby, the destruction beam emitter 23 can be directed at the pests.

When a distance focusing of the destruction beam is required (due to a shallow depth of field/focus of the destruction beam), a techniques of time-of-flight such as in the time-of-flight cameras (TOF sensor), used in robotics or in game consoles allowing to interact with the video game can be used. Also triangulation or techniques used in cameras, such as phase detection can be used.

For aiming the destruction beam in the direction of the target pest, a low intensity guiding laser such as a sniper can be used to show the actual focus of the guiding laser to the camera. Then, the targeting means 53 obtains the focus of the guiding laser and changes the position of the guiding laser by moving it, using mirrors mounted on piezoelectric actuators for example, until it is on the target pest.

Using the guiding laser, the targeting means 53 knows where the target pest is because it is filmed by the camera, and where the focus of the guiding laser is because it is also filmed by the camera. Then the targeting means 53 moves the focus of the guiding laser by moving along the vector oriented from the current focus of the guiding laser to the target pest. When they coincide, the power of the guiding laser is increased briefly to damage the target pest. The moment when the focus is achieved, the target pest can also be detected by the reflected color or the reflected spectrum of the focus by the camera itself or a dedicated receptor.

Instead of really moving the emitter or the receptor, mirrors mounted on piezoelectric actuators can be moved to direct the guiding laser or the destruction beam or to reflect different view angles of the field or the plants. An optical fiber of the guiding laser can be moved with piezoelectric actuators. Also the user can use optical fibers on mobile (or not) arms of the robot, combined (or not) with mirrors mounted on piezoelectric actuators.

However, it doesn't need a high distance focusing precision. So, the ideal situation is to have a laser that is not diverging too much (during the first meter from the destruction beam emitter 23 for example) so that there is no need to focus. As a result, any target between the destruction beam emitter 23 and 1-2 meters apart can be damaged without focus change. In other words, a narrow, very non-diverging destruction beam or laser can be used so that there is no need for a focusing system to damage the target in a reasonable range.

The pest control statistical data making means 54 is designed to make the pest control statistical data. Firstly, the pest control statistical data making means 54 acquires a useful data for a pest control of the reflected signal gathered in the reflected signal storage means 43. Subsequently, the pest control statistical data making means 54 makes the pest control statistical data described above by using the useful data.

The predicting means 55 is designed to predict a dynamics of the pests based on the pest control statistical data. For example, with a real time analysis of the spatial pest density, the predicting means 55 can calculate the density gradient to find the presence of a nest of pests. In this case, the predicting means 55 outputs an order to increase the number of patrols to the patrol device 2 in the area of the nest. Also, by using the pest density data, the predicting means 55 can run spatial population dynamics models, percolation models etc. on the control device 3 to predict when and where epidemics may emerge. That way, the patrol devices 2 are sent to work in the predicted area to prevent the emergence of a problem.

The predicting means 55 can also use spectroscopy to measure the level of water stress of plants, the quantity of their pigments, etc. to know their health and the quality of the crop. By using these data, associated with local weather forecast or local wind/ sun captors, the predicting means 55 can run models to predict the health of plants and act accordingly. For example, the predicting means 55 outputs an order to a watering device so as to start watering before water stress and stop watering when plants are not in need. This can save water and avoid fungi to develop in a soaked environment. Also if wind captors measured a strong North wind the previous day, the predicting means 55 can send the patrol devices 2 at the south of the field to prevent spores and small wind-carried pests from a nest to settle downwind to the nest.

In addition, the predicting means 55 estimates the trend of evolution in pests' signatures and serves to extrapolate future pests' signatures by comparing newly added data with current data in the signature data storage means 42. That way, the database evolves by predicting pests' signature trends and is never behind in the race of evolution.

Next, working of the pest control system 1A executed by the pest control program 1a and the pest control method of this embodiment will be described.

A circumstance of this embodiment is assumed that rails are laid on the ground between tomato plants and/or attached to the ceiling in a green house or a vertical farm building. The rails can be connected together at their extremity to form a unique circuit that goes through the whole crop surface. Energy is supplied to the patrol devices 2 through the rails. On these rails, the patrol devices 2 move slowly and patrol during night and day under control of the control device 3. Each of the patrol devices 2 carry LEDs as the detection beam emitter 21, a CCD camera as the reflected signal receptor 22, and a laser as the destruction beam emitter 23.

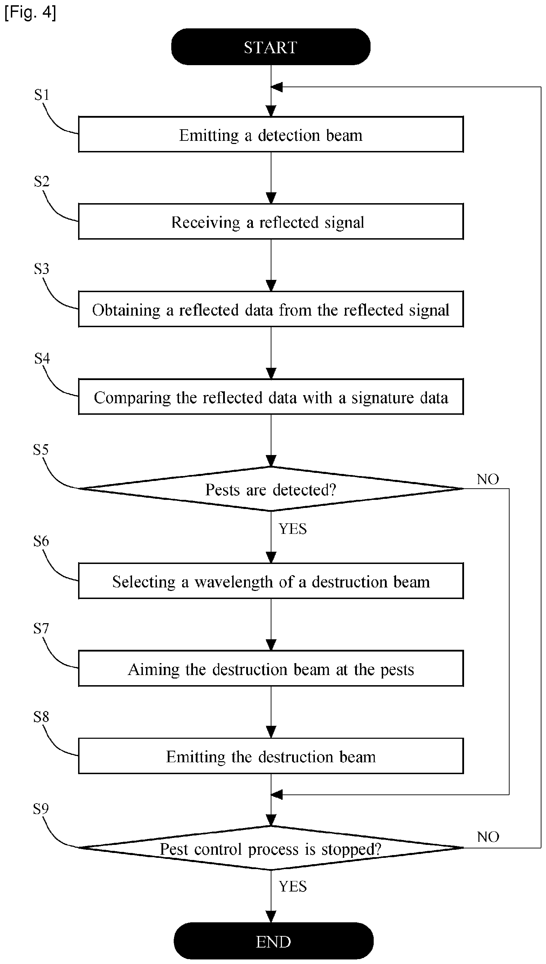

As shown in Figure 4, the detection beam emitter 21 continually emits the detection beam to the plants and the ground with wavelengths best revealing pests while the patrol devices 2 patrol among the plants of the crops (step S1). Next, the reflected signal receptor 22 receives a reflected signal reflected by an object irradiated with the detection beam (step S2). In this embodiment, movie took by the reflected signal receptor 22 are sent wirelessly by the patrol devices 2 to the control device 3 which analyzes it in real time to detect the pests using computer vision techniques and/or multi-spectral imaging.

Subsequently, the pest detecting means 51 obtains a reflected data from the reflected signal generated by the reflected signal receptor 22 (step S3). Then, the pest detecting means 51 compares the reflected data with the signature data stored in the signature data storage means 42 (step S4).

As a result, if both data are matched (step S5: YES), the pest detecting means 51 assumes that pests are detected and outputs an order for emitting the destruction beam to the destruction beam emitter 23. On the other hand, if both data are not matched (step S5: NO), the pest detecting means 51 determines that the pests are not detected and proceeds the procedure to step S9 described below. In this way, the pest control system 1A detects target pests, useful organisms, crops, damaged pests by said destruction beam, and symptoms of infestation, etc. with a high degree of accuracy.

In this embodiment, when the pests are detected, the pest detecting means 51 notifies the wavelength selecting means 52 of the species of the pests. Consequently, the wavelength selecting means 52 selects wavelengths of the destruction beam based on the signature data or the reflected data of the detected pest (step S6). In this way, the best wavelengths to destroy the pests from agriculture with no side affect to other organisms are selected.

The destruction beam emitter 23 can be a laser whose beam wavelengths can be decided by the wavelength selecting means 52 or can be a number of lasers each with different emitted wavelengths. Then the wavelength selecting means 52 decides which combination and intensity of lasers of the destruction beam emitter 23 is the most efficient.

In this embodiment, when the pests are detected, the pest detecting means 51 notifies the targeting means 53 of some data to destroy the pest. Consequently, the targeting means 53 aims the destruction beam at the pests accurately on the basis of those data (step S7). This prevents the destruction beam from emitting to objects other than target pests by mistake.

Afterward, the destruction beam emitter 23 emits the destruction beam to the pests on the basis of the destruction order from the pest detecting means 51 (step S8). In this way, the pests are destroyed, and repeating this process leads an extermination of the pests.

The control device 3 constantly monitors whether the pest control process is stopped by the user or not (step S9). As a result, if the user ordered the control device 3 to suspend operation (step S9: YES), the pest control process is stopped. If not (step S9: NO), the steps S1 to S9 described above are repeated.

Incidentally, when a plant with inner infestation symptoms is found in the step S5, it reveals that the pests are in the plant but not reachable. Based on this, patrol frequency of the patrol devices 2 may be increased around that plant, or a different patrol device 2 more specialized (weed/plant killer for example) in taking some action may be sent or other actions may be decided by the user.

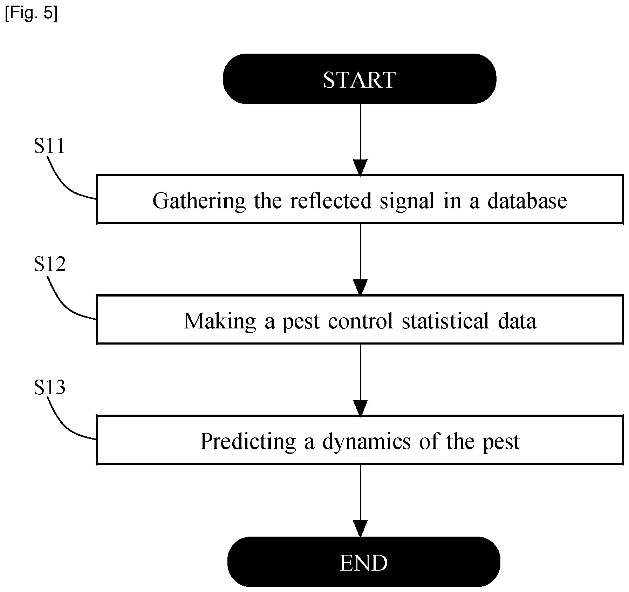

While the pest control process (Figure 4) is executed, as shown in Figure 5, the control device 3 builds the database in the reflected signal storage means 43 by gathering the reflected signal (step S11). In this way, the database can be built so as to follow the evolution of an epidemic in real time. Also, the user can adjust the level of efforts (number of patrol devices 2, speed of patrol devices 2, etc.) required to protect the crop.

Next, the pest control statistical data making means 54 makes the pest control statistical data (step S12). After that, the predicting means 55 predicts a dynamics of the pests, the health and the quality of the crop, and the position of pest's nest, etc. by use of the pest control statistical data (step S13). In this way, an optimal action for the patrol device 2 and the watering device can be selected on the basis of the prediction result.

According to the above-mentioned first embodiment, the following advantageous effects are achieved.
1. It is possible to detect the pests in real time and to destroy pests reliably without using pesticides.
2. It is possible to predict the dynamics of the pests and the health of the crops, etc. and to select an optimal action for the patrol device 2 and the watering device.
3. The destruction beam can be selected an optimal wavelength corresponding to various pests.
4. The wavelength of the destruction beam can be selected so as not to harm useful organisms, crops and humans.

Next, a second embodiment of the pest control system 1B, the pest control method and the pest control program 1b according to the present invention will be described. Descriptions in a constitution of this second embodiment, which are the same as or equivalent to the constitution of the aforementioned first embodiment, will be given with the identical symbols, and redundant descriptions corresponding to the first embodiment will not be provided.

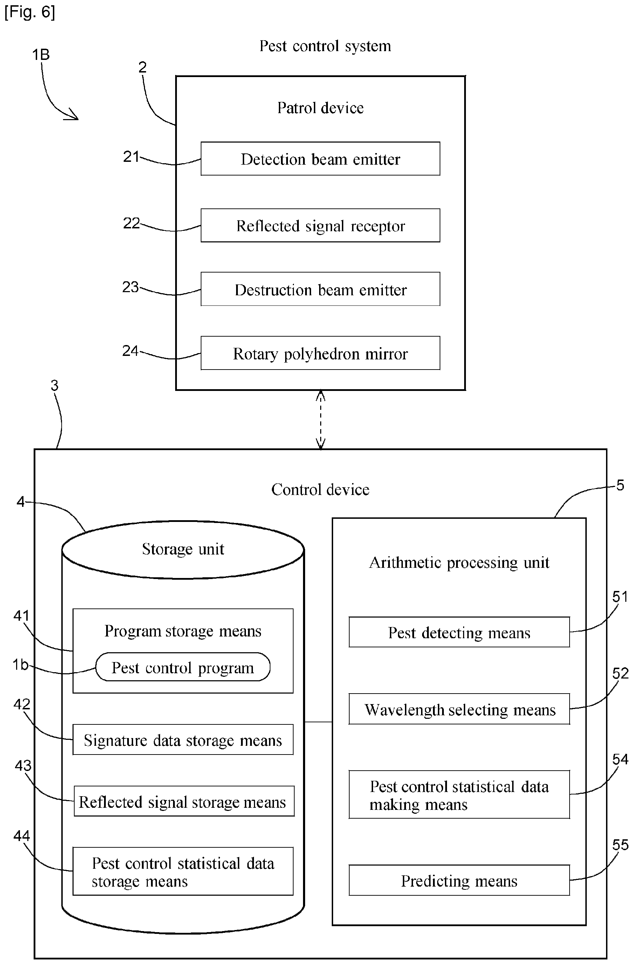

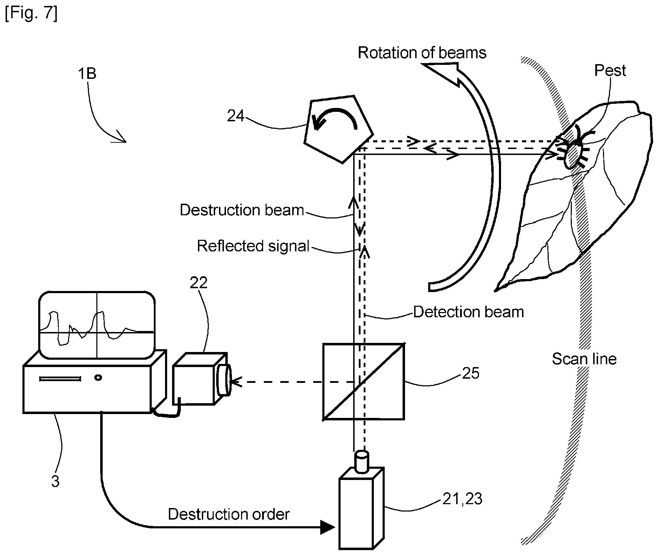

The second embodiment is characterized in that as shown in Figure 6, a rotary polyhedron mirror 24 is arranged instead of the targeting means 53 of the first embodiment. Specifically, as shown in Figure 7, the rotary polyhedron mirror 24 such as a barcode reader, has a plurality of mirrors arranged in the form of a polyhedron, and is rotating at a predetermined speed.

In this embodiment, the detection beam emitter 21 emits the detection beam to the rotary polyhedron mirror 24 via a separator 25 such as a beam splitter. Thereby an intended area is scanned by the detection beam reflected via one of the mirrors. That is, the detection beam sweeps plants and ground making a scan line for scanning the pests. To cover a wider area of the plants nooks and of the ground, a number of beams can emerge from different positions and scanning towards different directions, making several scan lines such as a grid.

Also, the reflected signal receptor 22 such as the spectrometer receives the reflected signal from the area via the mirror and the separator 25. The reflected signal is analyzed in real time to detect a possible spectral signature of a pest by the control device 3. As a result, the destruction beam emitter 23 irradiates the pests with the destruction beam guided by the separator 25, reflected via the mirror upon detecting the pests.

The detection beam(s) and the destruction beam(s) can be directed parallel and very close to each other. The rotary polyhedron mirror 24 reflects them in order to have the detection beam preceding the destruction beam on the scan line. That way, when the detection beam reveals a pest on the scan line, the destruction beam is fired just after. Chronologically, the detection beam arrives on a point A on the scan line. The point A is analyzed and destruction is decided. The detection beam continues sweeping the scan line followed by the destruction beam trailing it. When aligned toward A, the destruction beam is fired.

In general, the destruction beam travels very close and parallel to the detection beam, or takes the same path, depending on the device configuration. But spacing between the detection and destruction beams gives the control device 3, such as a computer, more time for calculation before firing the destruction beam. Time interval between detection and firing the destruction is calculated based on the rotary polyhedron mirror 24 rotation speed.

A practical example of the second embodiment will be described below. During day and night, patrol devices 2 are moving amongst furrows in a maize field guided by positional information emitters located at the limit of the field. On the patrol devices 2, several rotary polyhedron mirrors 24 reflect beams making a large scanning grid coming from above and below the plants and also reaching the ground.

The beam is reflected when reaching a plant or the soil and the reflected signal follows the same path as the incoming one but in opposite direction to end onto a spectrometer where it is analyzed and compared to the signature database. In case the beam was reflected by a pest, the signature matches with the corresponding pest signature in the database. The destruction beam is then fired by the control device 3.

The destruction beam can use the same path as the detection beam, or can be fired a short moment later using a path parallel but trailing (following) chronologically the detection beam along the scan line. Depending on the data gathered and the models ran by the control device 3, it can be decided to increase patrol frequency in the area with heavy infestation.

With this method, there is no need for the targeting means 53. Furthermore the detection beam gives an indication of the distance for a possible focusing of the destruction beam, in case distance focusing is required. The distance focusing of the destruction beam on the target does not need to be done all the time but only when the detection beam finds a pest.

According to the pest control system 1B, the pest control method and the pest control program 1b of the aforementioned second embodiment, an equivalent efficacy as that of the first embodiment can be achieved more easily.

Ideally, the progression speed of the patrol device 2 and the rotation speed of the rotary polyhedron mirror 24 are adjusted so that two consecutive scan lines do not overlap or are not separated by a gap. In other words, the patrol device 2 must progress a distance equivalent to the width of a scan line during the time of one scan line sweep.

If the scan line width is very narrow, the rotary polyhedron 24 would have to turn very fast to allow the patrol device 2 to progress rapidly. As a result, this would give short time for the pest detecting device 51 for calculation. To increase the progression speed of the patrol device 2, one can make interlaced scan lines: two parallel detection beams spaced with two scan line width, sent by two detection beam emitters 21 are reflected by the same rotary polyhedron mirror 24, making two parallel scan lines separated with two scan line widths, the speed of the patrol device 2 being two scan line widths per scan line sweep.

This allow the patrol device 2 to progress twice faster than when using one scan line without decreasing the calculation time for the pest detecting device 51. The number of interlaced scan lines can be increased to increase the progression speed of the patrol device 2 or give more calculation time to the pest detecting device 51. In the interlaced embodiment, each detection beam is followed by a destruction beam.

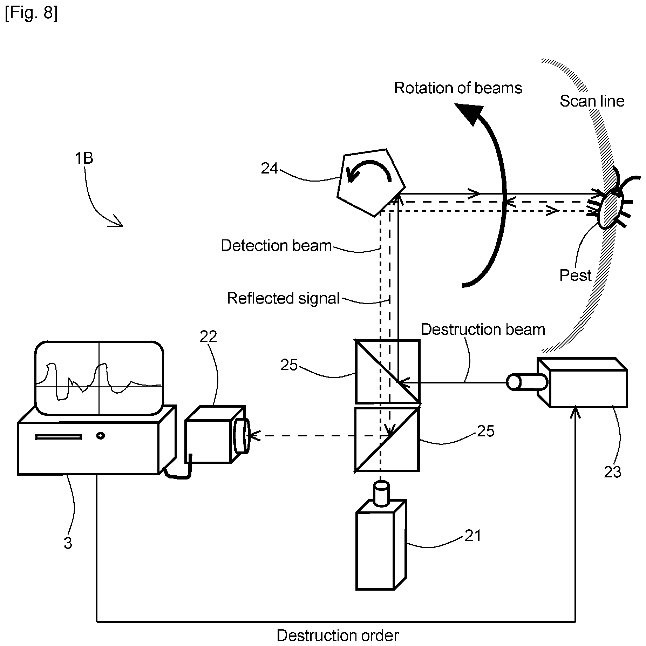

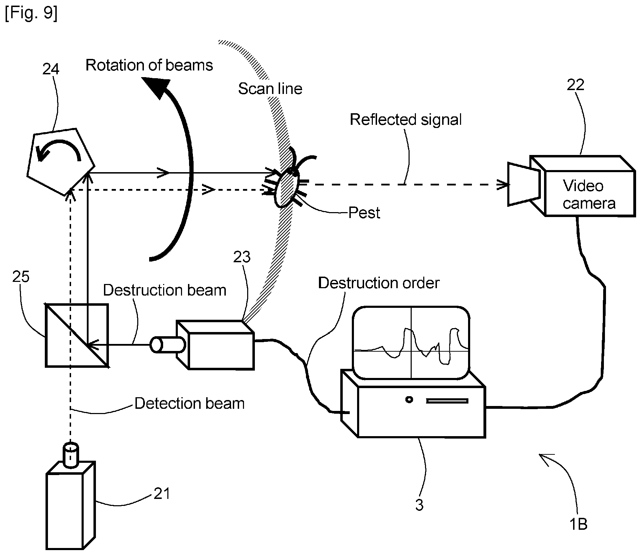

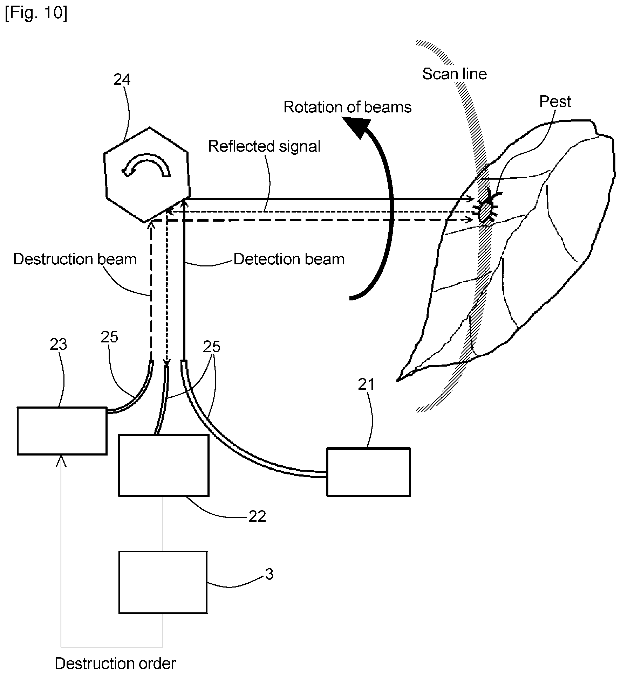

The system structure of the second embodiment is not limited to the above mentioned structure, but may be altered accordingly. For example, as shown in Figure 8, two separators 25 may be set up. Also, as shown in Figure 9, a system structure using a CCD camera as the reflected signal receptor 22 can be set up. Furthermore, as shown in Figure 10, optical fibers (or bundles) as the separator 25 can be set up. This makes the energy loss of the beam lower compared to a beam splitter.

Also the rotary polyhedron mirror 24 can reflect narrow bands of the plants/ground equivalent to large scans, towards a CCD/multispectral camera as the reflected signal receptor 22 so that the control device 3 can do computer vision and/or spectral analysis on each of the reflected bands as if one band were a series of contiguous snapshots along the band.

The present invention will now be described in more detail by way of examples. However, the present invention is not limited to these examples.

### Example

In the case of an arthropod on a leaf, for example, a short impulsion can damage its sensory or locomotive appendices, setting him harmless, without damaging the plant. For a group of black aphids or scale insects on a green leaf, a green beam, even on a large area, will be absorbed by the pests but reflected by the leaf. In the case of green aphids, even a green laser would burn there appendices before the temperature of the leaf would increase dangerously. It can also be taken advantage of the absorption spectrum of chitin, cuticle lipids or proteins present in large quantity in arthropods not to damage the plants. All these conditions are to be determined when making the database.

In case of a disease spot on a leaf due to a fungus, for example, the destruction beam of sufficient power sent on the spot can increase the temperature of the leaf and the spores of the fungus to kill them and avoid further spread. The destruction beam can also use UV to create mutations in the DNA of the pathogen preventing it growing, and eventually killing it.

Size of the area hit by the destruction beam is decided depending on the relative destruction beam energy absorption by the pest and the plant crop, as well as pest characteristics. If the destruction beam energy is not too much absorbed by the plant, then the destruction beam cone can be large to hit many pests, but the power of the destruction beam must also increase. In case of scan line strategy of the second embodiment, the beam can be straight and thin.

In case of weeds, the destruction beam heats up the part of the stem close to the ground with the most efficient wavelength, such as infrareds of microwaves, for example. The choice of wavelengths to kill pests is determined in the lab and can be based on the signature of the pest.

The pest control system, the pest control method and the pest control program according to the present invention are not limited to the above mentioned embodiment, but may be altered accordingly.

For example, several techniques of detection are explained above. They can be used separately or in variable combinations depending on the desired application. Other detection techniques not cited here can be used to apply the present invention.

Also, the control device 3 can use a neural network to help the decision of the status of a signature (pest, good, etc.) or other decision making method. Furthermore, the control device 3 may comprises a display unit such as Liquid Crystal Display and an input unit such as a keyboard and a mouse.

### Reference Signs List

- 1A: Pest control system (First embodiment)
- 1a: Pest control program (First embodiment)
- 1B: Pest control system (Second embodiment)
- 1b: Pest control program (Second embodiment)
- 2: Patrol device
- 3: Control device
- 4: Storage unit
- 5: Arithmetic processing unit
- 21: Detection beam emitter
- 22: Reflected signal receptor
- 23: Destruction beam emitter
- 24: Rotary polyhedron mirror
- 25: Separator
- 41: Program storage means
- 42: Signature data storage means
- 43: Reflected signal storage means
- 44: Pest control statistical data storage means
- 51: Pest detecting means
- 52: Wavelength selecting means
- 53: Targeting means
- 54: Pest control statistical data making means
- 55: Predicting means

## Claims

1. A pest control system (1A), comprising:
a detection beam emitter (21) for emitting a detection beam for detecting said pests;
a reflected signal receptor (22) for receiving a reflected signal reflected from an object irradiated with said detection beam;
a destruction beam emitter (23) for emitting said destruction beam to said pests upon detecting said pests;
a targeting means (53) for aiming a destruction beam from destruction beam emitter (23) at said pests for destroying said pests upon detecting said pests;
a control device (3) having
a storage unit (4) comprising a pest control program storage means and signature data storage means (42) which stores signature data including a signature of target pests and one or more signature data of useful organisms, crops, damaged pests by said destruction beam and symptoms of infestation, and
an arithmetic processing unit (5) comprising a pest detecting means (51) for detecting said pests by comparing a reflected data obtained from said reflected signal with the signature data stored in the signature data storage means (42) ;
**characterized in that** said pest control system (1A) comprises a patrol device (2) mounted on a self-propelled robot for patrolling areas of crop plants to be controlling pests and controlled by the arithmetic processing unit (5) of the control device (3), said patrol device (2) comprises said detection beam emitter (21), said reflected signal receptor (22) and said destruction beam emitter (23),
**in that** said reflected signal receptor (22) is a full/multispectral imaging camera that films the plant and the ground, and
**in that** said pest control system (1A) further comprises a low intensity guiding laser,
**in that** the targeting means is configured to move the focus of the low intensity guiding laser filmed by the full/multispectral imaging camera from the current focus of the guiding laser up to coincide with the target pest filmed by the camera.

2. The system according to claim 1, wherein said control device further comprises:
a reflected signal storage means (43) for gathering said reflected signal therein; a pest control statistical data making means (54) for making a pest control statistical data by using a useful data for a pest control of said reflected signal gathered in said reflected signal storage means (43); and a predicting means (55) for predicting a dynamics of said pests based on said pest control statistical data.

3. The system according to claim 1 or claim 2, wherein said low intensity guiding laser has a beam intensity that can be increased briefly to damage the target pest, so as to constitute the destruction beam emitter.

4. The system according to any one of claims 1 to 3, wherein said target means (53) comprise mirrors mounted on piezoelectric actuators for focusing said guiding laser and changing its position until it is on the target pest.

5. The system according to any one of claims 1 to 4, wherein said target means (53) comprise mirrors mounted on piezoelectric actuators to direct the destruction beam on the target pest or reflect different view angles of the crop plants.

6. The system according to any one of claims 1 to 5, wherein said control device comprises a wavelength selecting means (52) for selecting wavelengths of said destruction beam based on said signature data of said pests detected by said pest detecting means (51) and said signature data of useful organisms, crops plants, damaged pests by said destruction beam and symptoms of infestation so as to be absorbed by the pest with the least harmful effect on the crop plants.

7. A pest control method, using the pest control device of any of claims 1-6, comprising the steps of:
a detection beam emitting step (S1) for emitting a detection beam for detecting said pests;
a reflected signal receiving step (S2) for receiving a reflected signal reflected from an object irradiated with said detection beam;
a pest detecting step for detecting said pests by comparing a reflected data obtained from said reflected signal with a signature data including a signature of target pests and one or more signature data of useful organisms, crops, damaged pests by said destruction beam and symptoms of infestation;
a targeting step for aiming a destruction beam at said pests for destroying said pests upon detecting said pests; and
a destruction beam emitting step for emitting said destruction beam to said pests upon detecting said pests,
**characterized in that** the reflected signal receiving step is performed full/multispectral imaging camera that films the plant and the ground,
**in that** the targeting step is performed by moving the focus of the low intensity guiding laser filmed by the full/multispectral imaging camera from the current focus of the guiding laser up to coincide with the target pest filmed by the camera

8. The method according to claim 7, further comprising the steps of: a reflected signal gathering step for gathering said reflected signal in a reflected signal storage means (43); a pest control statistical data making step for making a pest control statistical data by using a useful data for a pest control of said reflected signal gathered in said reflected signal storage means (43); and a predicting step for predicting a dynamics of said pests based on said pest control statistical data.

9. The method according to claim 7 or claim 8, wherein the operations of focusing said guiding laser and changing its position until it is on the target pest is performed by mirrors mounted on piezoelectric actuators.

10. The method according to any one of claims 7 to 9, wherein further comprises a wavelength selecting step (S6) for selecting wavelengths of said destruction beam based on said signature data of said pests detected in said pest detecting step and said signature data of useful organisms, crops plants, damaged pests by said destruction beam and symptoms of infestation so as to be absorbed by the pest s with the least harmful effect on the crop plants.

11. A pest control computer program comprising instructions to cause the system of claims 1-6 to execute the method according to any one of claims 7 to 10.

## Patentansprüche

1. Schädlingsbekämpfungssystem (1A), umfassend:
einen Detektionsstrahlemitter (21) zum Emittieren eines Detektionsstrahls zum Erfassen der Schädlinge;
einen Reflektionssignalempfänger (22) zum Empfangen eines reflektierten Signals, das von einem mit dem Erfassungsstrahl bestrahlten Objekt reflektiert wird;
einen Zerstörungsstrahl-Emitter (23) zum Emittieren des Zerstörungsstrahls an die Schädlinge beim Erfassen der Schädlinge;
eine Zielvorrichtung (53) zum Zielen eines Zerstörungsstrahls von einem Zerstörungsstrahlemitter (23) auf die Schädlinge zum Zerstören der Schädlinge beim Erfassen der Schädlinge;
eine Steuervorrichtung (3) mit einem
eine Speichereinheit (4), die eine Speichereinrichtung für Schädlingsbekämpfungsprogramme und eine Signaturdatenspeichereinrichtung (42) umfasst, die Signaturdaten speichert, die eine Signatur von Zielschädlingen und eine oder mehrere Signaturdaten von nützlichen Organismen, Nutzpflanzen, beschädigten Schädlingen durch den Zerstörungsstrahl und Symptomen eines Befalls beinhalten, und
eine arithmetische Verarbeitungseinheit (5), die eine Schädlingserfassungseinrichtung (51) zum Erfassen der Schädlinge durch Vergleichen einer aus dem reflektierten Signal erhaltenen reflektierten Daten mit den in der Signaturdatenspeichereinrichtung (42) gespeicherten Signaturdaten umfasst;
**dadurch gekennzeichnet, dass** das Schädlingsbekämpfungssystem (1A) eine Streifenvorrichtung (2) umfasst, die an einem selbstfahrenden Roboter montiert ist.
zum Durchstreifen von Bereichen von Kulturpflanzen, die Schädlingen zu bekämpfen sind und von der arithmetischen Verarbeitungseinheit (5) der Steuervorrichtung (3) gesteuert werden, wobei die Streifenvorrichtung (2) den Detektionsstrahlemitter (21), den reflektierten Signalrezeptor (22) und den Zerstörungsstrahlemitter (23) umfasst,
dass der reflektierte Signalempfänger (22) eine Voll-/Multispektralbildkamera ist, die die Pflanze und den Boden filmt, und
dass das Schädlingsbekämpfungssystem (1A) ferner einen Führungslaser niedriger Intensität umfasst,
dass die Zielvorrichtung konfiguriert ist, um den Fokus des von der Voll-/Multispektralbildkamera aufgenommenen Führungslasers niedriger Intensität vom aktuellen Fokus des Führungslasers zu bewegen, um mit dem von der Kamera aufgenommenen Ziel-Schädling übereinzustimmen.

2. System nach Anspruch 1, wobei die Steuervorrichtung ferner umfasst: eine Speichereinrichtung (43) für reflektierte Signale zum Sammeln des reflektierten Signals darin; eine statistische Datenbildungseinrichtung (54) zur Schädlingsbekämpfung zur Herstellung statistischer Daten zur Schädlingsbekämpfung unter Verwendung nützlicher Daten für eine Schädlingsbekämpfung des in der Speichereinrichtung (43) für reflektierte Signale gesammelten reflektierten Signals; und eine Vorhersageeinrichtung (55) zur Vorhersage einer Dynamik der Schädlinge basierend auf den statistischen Daten zur Schädlingsbekämpfung.

3. System nach Anspruch 1 oder Anspruch 2, wobei der niederintensive Führungslaser eine Strahlintensität aufweist, die kurzzeitig erhöht werden kann, um den Zielschädling zu schädigen, um den Zerstörungsstrahl-Emitter zu bilden.

4. System nach einem der Ansprüche 1 bis 3, wobei die Zielmittel (53) Spiegel umfassen, die auf piezoelektrischen Stellgliedern montiert sind, um den Führungslaser zu fokussieren und seine Position zu ändern, bis er sich auf dem Zielschädling befindet.

5. System nach einem der Ansprüche 1 bis 4, wobei die Zielmittel (53) Spiegel umfassen, die an piezoelektrischen Stellgliedern montiert sind, um den Zerstörungsstrahl auf den Zielschädling zu richten oder verschiedene Blickwinkel der Kulturpflanzen zu reflektieren.

6. System nach einem der Ansprüche 1 bis 5, wobei die Steuervorrichtung ein Wellenlängenauswahlmittel (52) zum Auswählen der Wellenlängen des Zerstörungsstrahls basierend auf den Signaturdaten der von dem Schädlingserfassungsmittel (51) erfassten Schädlinge und den Signaturdaten von Nutzorganismen, Nutzpflanzen, beschädigten Schädlingen durch den Zerstörungsstrahl und Befallssymptomen umfasst, um von dem Schädling mit der geringsten schädlichen Wirkung auf die Kulturpflanzen absorbiert zu werden.

7. Schädlingsbekämpfungsverfahren unter Verwendung der Schädlingsbekämpfungsvorrichtung nach einem der Ansprüche 1-6, umfassend die Schritte von:
einen Detektionsstrahl-Emissionsschritt (S1) zum Emittieren eines Detektionsstrahls zum Erfassen der Schädlinge;
einen Schritt (S2) zum Empfangen eines reflektierten Signals, das von einem mit dem Erfassungsstrahl bestrahlten Objekt reflektiert wird;
einen Schritt zum Erkennen von Schädlingen zum Erkennen der Schädlinge durch Vergleichen von reflektierten Daten, die aus dem reflektierten Signal erhalten wurden, mit Signaturdaten, die eine Signatur von Zielschädlingen und eine oder mehrere Signaturdaten von nützlichen Organismen, Nutzpflanzen, beschädigten Schädlingen durch den Zerstörungsstrahl und Symptomen eines Befalls beinhalten;
einen Zielschritt zum Richten eines Zerstörungsstrahls auf die Schädlinge zum Zerstören der Schädlinge beim Erfassen der Schädlinge; und
einen Zerstörungsstrahl-Emissionsschritt zum Emittieren des Zerstörungsstrahls an die Schädlinge beim Erfassen der Schädlinge,
**dadurch gekennzeichnet, dass** der Schritt zum Empfangen des reflektierten Signals eine Voll-/Multispektralbildkamera ist, die die Pflanze und den Boden filmt,
dass der Zielschritt durchgeführt wird, indem der Fokus des von der Voll-/Multispektralbildkamera aufgenommenen niederintensiven Führungslasers vom aktuellen Fokus des Führungslasers verschoben wird, um mit dem von der Kamera aufgenommenen Ziel-Schädling übereinzustimmen.

8. Verfahren nach Anspruch 7, ferner umfassend die Schritte: einen Schritt zum Sammeln des reflektierten Signals zum Sammeln des reflektierten Signals in einer Speichereinrichtung (43) für reflektierte Signale; einen Schritt zum Erstellen statistischer Schädlingskontrolldaten zum Erstellen statistischer Daten zur Schädlingsbekämpfung unter Verwendung nützlicher Daten für eine Schädlingsbekämpfung des in der Speichereinrichtung (43) für reflektierte Signale gesammelten reflektierten Signals; und einen Schritt zum Vorhersagen einer Dynamik der Schädlinge basierend auf den statistischen Daten zur Schädlingsbekämpfung.

9. Verfahren nach Anspruch 7 oder Anspruch 8, wobei die Vorgänge der Fokussierung des Führungslasers und der Änderung seiner Position, bis er sich auf dem Zielschädling befindet, durch Spiegel durchgeführt werden, die an piezoelektrischen Stellgliedern montiert sind.

10. Verfahren nach einem der Ansprüche 7 bis 9, worin ferner ein Wellenlängenauswahlschritt (S6) zum Auswählen von Wellenlängen des Zerstörungsstrahls basierend auf den Signaturdaten der in dem Schritt zum Erfassen von Schädlingen erfassten Schädlinge und den Signaturdaten von Nutzorganismen, Nutzpflanzen, geschädigten Schädlingen durch den Zerstörungsstrahl und Befallssymptomen umfasst, um von den Schädlingen mit der geringsten schädlichen Wirkung auf die Kulturpflanzen absorbiert zu werden.

11. Schädlingsbekämpfungs-Computerprogramm, umfassend Anweisungen, um das System der Ansprüche 1-6 zu veranlassen, das Verfahren nach einem der Ansprüche 7 bis 10 auszuführen.

## Revendications

1. Système lutte contre les bioagresseurs (1A), comprenant:
un émetteur de faisceau de détection (21) pour émettre un faisceau de détection pour détecter lesdits bioagresseurs ;
un récepteur de signal réfléchi (22) pour recevoir un signal réfléchi, réfléchi par un objet irradié par ledit faisceau de détection ;
un émetteur de faisceau de destruction (23) pour émettre ledit faisceau de destruction vers lesdits bioagresseurs lors de la détection desdits bioagresseurs ;
un moyen de ciblage (53) pour diriger un faisceau de destruction provenant d'un émetteur de faisceau de destruction (23) vers lesdits bioagresseurs pour détruire lesdits bioagresseurs lors de la détection desdits bioagresseurs ;
un dispositif de commande (3) ayant
une unité de stockage (4) comprenant un moyen de stockage de programme de lutte contre les bioagresseurs et un moyen de stockage de données de signatures (42) qui stocke des données de signatures incluant une signature de bioagresseurs cibles et une ou plusieurs données de signatures d'organismes utiles, de cultures, de bioagresseurs endommagés par ledit faisceau de destruction et de symptômes d'infestation, et
une unité de traitement arithmétique (5) comprenant un moyen de détection de bioagresseurs (51) pour détecter lesdits bioagresseurs en comparant une donnée réfléchie obtenue à partir dudit signal réfléchi avec les données de signatures stockées dans le moyen de stockage de données de signatures (42) ;
**caractérisé en ce que** ledit système de lutte contre les bioagresseurs (1A) comprend un dispositif de patrouille (2) monté sur un robot autopropulsé
pour patrouiller des zones de plantes cultivées pour lutter contre des bioagresseurs et commandé par l'unité de traitement arithmétique (5) du dispositif de commande (3), ledit dispositif de patrouille (2) comprend ledit émetteur de faisceau de détection (21), ledit récepteur de signal réfléchi (22) et ledit émetteur de faisceau de destruction (23),
**en ce que** ledit récepteur de signal réfléchi (22) est une caméra d'imagerie pleine/multispectrale qui filme la plante et le sol, et
**en ce que** ledit système de lutte contre les bioagresseurs (1A) comprend en outre un laser de guidage à faible intensité,
**en ce que** le moyen de ciblage est configuré pour déplacer le foyer du laser de guidage à faible intensité filmé par la caméra d'imagerie pleine/multispectrale de la position actuelle du foyer du laser de guidage jusqu'à coïncider avec le bioagresseur cible filmé par la caméra.

2. Système selon la revendication 1, dans lequel ledit dispositif de commande comprend en outre : un moyen de stockage de signaux réfléchis (43) pour y recueillir lesdits signaux réfléchis ; un moyen de production de données statistiques de lutte contre les bioagresseurs (54) pour produire des données statistiques de lutte contre les bioagresseurs en utilisant des données utiles pour une lutte contre les bioagresseurs dudit signal réfléchi recueilli dans ledit moyen (43) de stockage de signaux réfléchis ; et un moyen (55) de prévision pour prévoir une dynamique desdits bioagresseurs en fonction desdites données statistiques de lutte contre les bioagresseurs.

3. Système selon la revendication 1 ou la revendication 2, dans lequel ledit laser de guidage à faible intensité a une intensité de faisceau qui peut être augmentée brièvement pour endommager le bioagresseur cible, de manière à constituer l'émetteur du faisceau de destruction.

4. Système selon l'une quelconque des revendications 1 à 3, dans lequel ledit moyen de ciblage (53) comprend des miroirs montés sur des actionneurs piézoélectriques pour focaliser ledit laser de guidage et changer sa position jusqu'à ce qu'il soit sur le bioagresseur cible.

5. Système selon l'une quelconque des revendications 1 à 4, dans lequel ledit moyen de ciblage (53) comprend des miroirs montés sur des actionneurs piézoélectriques pour diriger le faisceau de destruction sur le bioagresseur cible ou refléter différents angles de vue des plantes cultivées.

6. Système selon l'une quelconque des revendications 1 à 5, dans lequel ledit dispositif de commande comprend un moyen de sélection de longueur d'onde (52) pour sélectionner des longueurs d'onde dudit faisceau de destruction sur la base desdites données de signatures desdits bioagresseurs détectés par ledit moyen de détection de bioagresseurs (51) et desdites données de signatures des organismes utiles, plantes cultivées, bioagresseurs endommagés par ledit faisceau de destruction et de symptômes d'infestation de façon à être absorbées par les bioagresseurs avec le moindre effet nocif sur les plantes cultivées.

7. Procédé de lutte contre les bioagresseurs, utilisant le dispositif de lutte contre les bioagresseurs de l'une quelconque des revendications 1-6, comprenant les étapes consistant en :
une étape d'émission d'un faisceau de détection (S1) pour émettre un faisceau de détection pour détecter lesdits bioagresseurs;
une étape de réception de signal réfléchi (S2) pour recevoir un signal réfléchi, réfléchi par un objet irradié par ledit faisceau de détection ;
une étape de détection de bioagresseurs pour détecter lesdits bioagresseurs en comparant une donnée réfléchie obtenue à partir dudit signal réfléchi avec une donnée de signature incluant une signature de bioagresseurs cibles et une ou plusieurs données de signatures d'organismes utiles, de cultures, de bioagresseurs endommagés par ledit faisceau de destruction et de symptômes d'infestation ;
une étape de ciblage pour diriger un faisceau de destruction vers lesdits bioagresseurs afin de détruire lesdits bioagresseurs lors de leur détection ; et
une étape d'émission d'un faisceau de destruction pour émettre ledit faisceau de destruction vers lesdits bioagresseurs lors de la détection desdits bioagresseurs,
**caractérisé en ce que** l'étape de réception du signal réfléchi est effectuée par une caméra d'imagerie pleine/multispectrale qui filme la plante et le sol,
**en ce que** l'étape de ciblage est effectuée en déplaçant le foyer du laser de guidage à faible intensité filmé par la caméra d'imagerie pleine/multispectrale du foyer actuel du laser de guidage jusqu'à coïncider avec le bioagresseurs cible filmé par la caméra.

8. Procédé selon la revendication 7, comprenant en outre les étapes consistant en :
une étape de collecte de signal réfléchi pour collecter ledit signal réfléchi dans un moyen de stockage de signaux réfléchis (43) ; une étape de production de données statistiques de lutte contre les bioagresseurs pour produire des données statistiques de lutte contre les bioagresseurs en utilisant des données utiles pour une lutte contre les bioagresseurs dudit signal réfléchi recueilli dans ledit moyen de stockage de signaux réfléchis (43) ; et une étape de prévision pour prévoir une dynamique desdits bioagresseurs à partir desdites données statistiques de lutte contre les bioagresseurs.

9. Procédé selon la revendication 7 ou la revendication 8, dans lequel les opérations de focalisation dudit laser de guidage et de modification de sa position jusqu'à ce qu'il soit sur le bioagresseurs cible sont effectuées par des miroirs montés sur des actionneurs piézoélectriques.

10. Procédé selon l'une quelconque des revendications 7 à 9, lequel comprend en outre une étape de sélection de longueur d'onde (S6) pour sélectionner des longueurs d'onde dudit faisceau de destruction sur la base desdites données de signatures desdits bioagresseurs détectés dans ladite étape de détection de bioagresseurs et desdites données de signatures des organismes utiles, plantes cultivées, bioagresseurs endommagés par ledit faisceau de destruction et de symptômes d'infestation de manière à être absorbées par les bioagresseurs avec le moindre effet nuisible sur les plantes cultivées.

11. Programme informatique de lutte contre les bioagresseurs comprenant des instructions pour amener le système des revendications 1-6 à exécuter la méthode selon l'une quelconque des revendications 7 à 10.
